# EUROPÄISCHE PATENTSCHRIFT

(11) **EP 1 534 464 B1**
(45) Veröffentlichungstag und Bekanntmachung des Hinweises auf die Patenterteilung: **21.06.2006**
(21) Anmeldenummer: 03750315.8
(22) Anmeldetag: 03.09.2003
(51) Int. Cl.: B23K 26/32, B23K 26/42, B23K 26/10

(54) **VERFAHREN ZUR LASERBEARBEITUNG BESCHICHTETER BLECHE**
METHOD FOR THE LASER MACHINING OF COATED SHEETS
PROCEDE D'USINAGE AU LASER DE TOLES REVETUES

(30) Priorität: 05.09.2002 DE 10241593
(43) Veröffentlichungstag der Anmeldung: 01.06.2005
(60) Teilanmeldung: 05028329.0
(73) Patentinhaber: DaimlerChrysler AG, 70567 Stuttgart (DE)
(72) Erfinder: ZAUNER, Daniel, 89177 Ballendorf (DE); REINIGER, Claus-Dieter, 73630 Remshalden 4 (DE); BECKER, Wolfgang, 89081 Ulm (DE); GOTH, Klaus, 71067 Sindelfingen (DE); PÄLMER, Mike, 71263 Weil der Stadt (DE)
(86) Internationale Anmeldenummer: PCT/DE2003/002927
(87) Internationale Veröffentlichungsnummer: WO 2004/024385

(56) Entgegenhaltungen:
- WO-A-99/08829
- DE-A- 4 407 190
- PATENT ABSTRACTS OF JAPAN vol. 1999, no. 05, 31. Mai 1999 (1999-05-31) & JP 11 047967 A (NEC CORP), 23. Februar 1999 (1999-02-23) in der Anmeldung erwähnt

## Beschreibung

Die Erfindung betrifft ein Verfahren zur Laserbearbeitung beschichteter Bleche gemäß dem Oberbegriff des Patentanspruchs 1. Ein derartiges Verfahren ist bereits aus der DE 44 07 190 A1 oder der WO 99/08829 A1 bekannt.

Bei vielen beschichteten Blechen, insbesondere bei Zinkbeschichteten Blechen wie sie in der Automobilindustrie Verwendung finden, weist das Beschichtungsmaterial einen deutlich niedrigeren Siedepunkt auf als der Schmelzpunkt des Blechmaterials. Dadurch kommt es beim Laserschweissen derartiger Bleche im Überlapp-Stoß zu explosionsartigen Verdampfungen von Beschichtungsmaterial, welche die Qualität der Verbindung stark beeinträchtigen.

Zur Verbesserung der Verbindungsqualität wurde bereits vorgeschlagen, mittels Abstandhaltern enge Spalten zwischen den Blechen zu erzeugen, in die das verdampfte Beschichtungsmaterial entweichen kann. Geeignete kraterförmige Abstandhalter können gemäß der JP 11-047967 durch Laserbeschuß der Oberfläche erzeugt werden. Gemäß der DE 44 07 190 A1 können rändelungsartige Abstandhalter mittels einer Laser-Scanner-Einrichtung hergestellt werden.

Nachteilig dabei ist vor allem die erforderliche relativ lange Bearbeitungszeit, welche insbesondere in der Serienproduktion erhebliche Kosten verursacht.

Die Aufgabe der vorliegenden Erfindung besteht daher darin, die erforderliche Bearbeitungszeit zur Herstellung der Abstandshalter zu senken und dabei die Bearbeitungsqualität mindestens beizubehalten, vorzugsweise zu verbessern.

Die Erfindung ist in Bezug auf das zu schaffende Verfahren durch die Merkmale des Patentanspruchs 1 wiedergegeben. Die weiteren Ansprüche enthalten vorteilhafte Ausgestaltungen und Weiterbildungen des erfindungsgemäßen Verfahrens (Patentansprüche 2 bis 6).

Die Aufgabe wird bezüglich des zu schaffenden Verfahrens erfindungsgemäß durch die im kennzeichnenden Teil des Anspruchs 1 beschriebenen Merkmale gelöst.

In einer vorteilhaften Ausführungsform des erfindungsgemäßen Verfahrens erzeugt der Laserstrahl die mindestens eine Topographieänderung auf der ihm abgewandten Seite des mindestens einen Bleches, indem er dieses Blech im Bereich seiner Bearbeitungsfläche durchgehend aufschmilzt. Hierzu ist eine geeignete Bearbeitungszeit bis zum Durchtritt vorzugeben oder auch ein Durchtrittssensor vorzusehen, der die Bearbeitungszeit regelt. Diese Ausgestaltung ermöglicht eine weitere Verfahrensbeschleunigung beim Zusammenschweissen mehrerer Bleche. Bei dem Verfahren gemäß der JP 11-047967 wird zunächst ein einzelnes Blech ausgerichtet und dann werden Topographieänderungen auf dieses Blech aufgebracht, danach wird ein weiteres Blech zugeführt und relativ zu dem ersten ausgerichtet und dann werden beide zusammengepreßt und verschweißt. Vorteilhafter ist es aber, beide Bleche gemeinsam ohne Anpressdruck auszurichten. Mangels Anpressdruck verbleibt ein für die meisten Anwendungen ausreichender Minimalspalt zwischen den Blechen, er kann jedoch auch mittels einer geeigneten Ausrichtvorrichtung gewährleistet werden. Danach werden durch eines oder auch durch beide der Bleche Topographieänderungen gemäß dieser vorteilhaften Ausführungsform des erfindungsgemäßen Verfahrens eingebracht. Danach werden die Bleche zusammengepreßt und miteinander verschweisst. In Anbetracht der hohen Geschwindigkeit der Scanner-Einrichtung und der Erzeugung der Topographieänderungen bedeutet die Einsparung eines Ausrichtvorgangs eine ganz wesentliche Zeitersparnis.

Vorteilhaft ist es auch, wenn der Laserstrahl von der Scanner-Einrichtung derart geführt wird, daß er um das Zentrum seiner Bearbeitungsfläche eine enger werdende Spirale beschreibt. Dies ermöglicht insbesondere bei einer durchschießenden Bearbeitung gleichmäßigere Aufschmelz- und Abkühlvorgänge und somit die Ausbildung einer Topographieänderung in Form einer gleichmäßig konturierten Erhebung einfügen.

Eine Scanner-Einrichtung ist eine besonders schnelle und flexible Stahlablenk-Einrichtung, beispielsweise ein Spiegelsystem (aus mindestens einem ein- oder mehr-achsig ansteuerbaren schwenkbaren Spiegeln) oder auch akusto-optische Modulatoren.

Der große Vorteil des erfindungsgemäßen Verfahrens gegenüber dem in JP 11-047967 vorgeschlagenen besteht darin, daß die Scanner-Einrichtung gleichmäßig relativ zur Oberfläche eines Bleches bewegt wird und dabei die Scannereinrichtung den Laserstrahl für einen kurzen Bearbeitungszeitraum auf eine Bearbeitungsfläche lenkt und dann sehr schnell auf eine andere Bearbeitungsfläche umlenkt Hierdurch entfallen die für die Umpositionierung des Lasersstrahls erforderlichen Zeiten nahezu vollständig. Somit wird eine sehr hohe Auslastung des Lasersystems ermöglicht.

Im Gegensatz dazu wird bei einem konventionellem Lasersystem, wie es beispielsweise in der JP 11-047967 zur Anwendung kommt, ein Laserstrahl mittels eines starren Linsensystem auf die Bearbeitungsfläche gelenkt. Für den Übergang zu einer zweiten Bearbeitungsfläche muß das Linsensystem relativ zum Bauteil bewegt werden, währenddessen muß der Laser ausgeschaltet werden. Weiterhin sind die Lage und Anordnung der Topographieänderungen erfindungsgemäß innerhalb des Bearbeitungsbereiches des Laserscanners frei programmierbar. Im Vergleich zum starren Linsensystem muß der Laserscanner nicht über die einzelnen Topographieänderungen positioniert werden, sondern kann in vorteilhafter Weise auf einer optimierten Bahn zwischen den Topographieänderungen geführt werden. Aus diesen Unterschieden resultieren sehr unterschiedliche erforderliche Bearbeitungszeiten: Mittels eines Laserscanners ist die Erzeugung von 30 geeigneten Topographieänderungen in circa 0,3 Sekunden möglich, ein konventionelles System erfordert circa die 10-fache Bearbeitungszeit.

In einer vorteilhaften Ausführungsform des erfindungsgemä-βen Verfahrens ist der Laserstrahl nicht auf die Oberfläche fokussiert. Vorzugsweise befindet sich der Fokus in einer solchen Entfernung von der Oberfläche des zu bearbeitenden Bleches, dass die Bestrahlungsfläche des Lasers auf der Oberfläche dessen Fokusfläche um mindestens 50 Prozent, besser 200 Prozent übersteigt. Die gesamte Bearbeitungsfläche wird durch Bewegung der Bestrahlungsfläche mittels minimaler Umlenkung des Laserstrahls abgedeckt. Eine solche flächige Erwärmung vergleichmäßigt den Aufschmelzvorgang von Beschichtung und Blech und begünstigt die Ausbildung geeigneter Topographieänderungen.

In einer weiteren vorteilhaften Ausführungsform des erfindungsgemäßen Verfahrens wird mindestens ein weiteres Blech mit dem mindestens einen beschichteten Blech derart in Kontakt gebracht, daß die mindestens eine herausragende Topographieänderung die Ausbildung mindestens eines Spaltes zwischen den mindestens zwei Blechen bewirkt, und daß die mindestens zwei Bleche im Bereich des mindestens einen Spaltes miteinander verschweisst werden, derart, daß dabei auftretende Verdampfungsprodukte in den mindestens einen Spalt entweichen können. Die Entweichmöglichkeit für die Verdampfungsprodukte gewährleistet eine wesentlich höhere Qualität der Schweißnaht.

In einer anderen vorteilhaften Ausführungsform des erfindungsgemäßen Verfahrens werden die mindestens zwei Bleche derart miteinander verschweisst werden, daß die entstehende Schweissnaht die vorher erzeugte mindestens eine Topographieänderung zumindest teilweise überschweißt.

Jede derartige Topographieänderung stellt eine Verletzung der Beschichtung dar, da diese infolge der Laserbestrahlung verdampft und das blanke Blechmaterial zurückbleibt. Insbesondere eine Zinkbeschichtung im Automobilbau dient als Korrosionsschutz. Jede Verletzung kann einen Korrosionskeim darstellen. Eine Schweißnaht stellt zwar ebenfalls eine derartige Verletzung dar, sie ist aber für die Verbindung zwingend erforderlich. Dadurch, daß die Schweißnaht über die Topographieänderungen gezogen wird und diese zumindest teilweise ersetzt, wird die Anzahl der möglichen Korrosionskeime vermindert und damit das Korrosionsrisiko gemindert. Für eine nachfolgende Korrosionsschutzbehandlung, insbesondere Galvanisierung, ist die Form der Topographieänderungen wesentlich: Erfindungsgemäß bildet sich ein gleichmäßig konturierter Berg aus, gemäß der JP 11-047967 bildet sich ein Krater aus. Ein Berg weist eine geringere Oberfläche als ein aus der gleichen Materialmenge gebildeter Krater auf und somit eine geringere Angriffsfläche gegenüber Korrosion. Darüber hinaus kann ein Berg auch zwischen zwei Blechen allseitig galvanisiert werden. Ein Krater wird jedoch von dem oben liegenden Blech abgedeckt und kann innen nicht galvanisiert werden. In das Kraterinnere kann während des Zusammenfügens der Bleche Feuchtigkeit gelangen und die Topographieänderung wird zum Korrosionskeim.

Nachfolgend wird anhand zweier Ausführungsbeispiele das erfindungsgemäße Verfahren näher erläutert:

In einem ersten Ausführungsbeispiel wird ein beschichtetes Blech ausgerichtet, eine Scanner-Einrichtung wird gleichmäßig darüber verfahren und lenkt einen Laserstrahl nacheinander auf mehrere Bearbeitungsflächen. Die Scanner-Einrichtung besteht aus einem zwei-dimensional schwenkbaren computer-gesteuerten Spiegelsystem. Die Scannereinrichtung weist circa 320 mm Abstand zur Oberfläche des Bleches auf, der Laserfokus befindet sich circa 20 mm vor der Oberfläche. Durch die Defokussierung des Laserstrahls erfolgt eine flächige und gleichmäßige Erwärmung der Bearbeitungsfläche. Daraus resultiert eine gleichmäßigere Verdampfung der Beschichtung und die Ausbildung einer Topographieänderung in Form eines gleichmäßig konturierten Berges. Nach Erzeugung der benötigten Anzahl von Topographieänderungen wird ein zweites Blech zugeführt und ausgerichtet und danach werden beide zusammengepreßt und miteinander verschweißt.

In einem zweiten Ausführungsbeispiel werden zwei beschichtete Bleche übereinander beabstandet ausgerichtet. Eine Scanner-Einrichtung wird gleichmäßig darüber verfahren und lenkt einen Laserstrahl nacheinander auf mehrere Bearbeitungsflächen. Die Scanner-Einrichtung besteht aus einem zwei-dimensional schwenkbaren computer-gesteuerten Spiegelsystem. Die Scanner-einrichtung weist circa 305 mm Abstand zur Oberfläche eines Bleches auf, der Laserfokus befindet sich circa 4-7 mm vor der Oberfläche. Der Laserstrahl wird von der Scanner-Einrichtung derart geführt, daß er um das Zentrum seiner Bearbeitungsfläche eine enger werdende Spirale beschreibt. Durch die Defokussierung des Laserstrahls erfolgt eine flächige und gleichmäßige Erwärmung der Bearbeitungsfläche. Durch die spiralförmige Bewegung von außen nach innen erfolgt eine gleichmäßigere Ausbildung der Topographieänderung auf der Laser-abgewandten Seite des Bleches in Form eines gleichmäßig konturierten Berges. Nach Erzeugung der benötigten Anzahl von Topographieänderungen werden beide Bleche zusammengepreßt und miteinander verschweißt. Dabei wird die Schweißnaht zumindest über einige der Topographieänderungen geführt.

Das erfindungsgemäße Verfahren erweist sich in den Ausführungsformen der vorstehend beschriebenen Beispiele als besonders geeignet für das Laserschweißen beschichteter Bleche in der Automobilindustrie.

Insbesondere können so erhebliche Vorteile bezüglich der Bearbeitungszeit erzielt werden. Aber auch der Korrossionsschutz kann durch die verbesserte Form der Topographieänderungen und durch die Führung der Schweißnaht über zumindest einen Teil der Topographieänderungen verbessert werden.

Die Erfindung ist nicht nur auf die zuvor geschilderten Ausführungsbeispiele beschränkt, sondern vielmehr auf weitere übertragbar.

So ist zum Beispiel denkbar, daß die Scanner-Einrichtung anstatt durch ein Spiegelsystem durch akusto-optische Modulatoren auszubilden. Ferner ist es möglich statt den Laserscanner über die Bauteiloberfläche zu führen, die Bauteile unter einem ortsfesten Scanner zu bewegen. Gegebenenfalls können Scanner und Bauteil eine gegenseitig koordinierte Bewegung vollführen.

Auch der Abstand der Scanner-Einrichtung vom Blech und der Grad der Defokussierung sind nicht zwingend und können bei Bedarf, beispielsweise an die Laserleistung oder auch an das Material von Blech und/oder Beschichtung, angepaßt werden. Zusätzlich kann es vorteilhaft sein, die Laserleistung während der Bestrahlung in geeigneter Weise zu variieren.

## Patentansprüche

1. Verfahren zur Laserbearbeitung beschichteter Bleche, bei dem auf mindestens einer Seite mindestens eines Bleches mittels des Lasers mindestens eine aus der Oberfläche herausragende Topographieänderung erzeugt wird, wobei der Laserstrahl mittels einer Scanner-Einrichtung auf die Oberfläche gelenkt wird,
**dadurch gekennzeichnet,**
- **dass** der Laserstrahl die mindestens Topographieänderung auf der ihm abgewandten Seite des mindestens einen Bleches erzeugt, indem er dieses Blech im Bereich seiner Bearbeitungsfläche durchgehend aufschmilzt, und/oder
- **dass** der Laserstrahl um das Zentrum seiner Bearbeitungsfläche eine enger werdende Spirale beschreibt.

2. Verfahren nach Anspruch 1,
**dadurch gekennzeichnet,**
**dass** der Laserstrahl nicht auf die Oberfläche fokussiert wird.

3. Verfahren nach einem der vorhergehenden Ansprüche
**dadurch gekennzeichnet,**
**dass** mindestens ein weiteres Blech mit dem mindestens einen beschichteten Blech derart in Kontakt gebracht wird, dass die mindestens eine herausragende Topographieänderung die Ausbildung mindestens eines Spaltes zwischen den mindestens zwei Blechen bewirkt, und
**dass** die mindestens zwei Bleche im Bereich des mindestens einen Spaltes miteinander verschweisst werden, derart, dass dabei auftretende Verdampfungsprodukte in den mindestens einen Spalt entweichen können.

4. Verfahren nach Anspruch 3,
**dadurch gekennzeichnet,**
**dass** die mindestens zwei Bleche derart miteinander verschweisst werden, dass die entstehende Schweissnaht die vorher erzeugte mindestens eine Topographieänderung zumindest teilweise ersetzt.

## Claims

1. Method for the laser machining of coated sheets, in which, on at least one side of at least one sheet, at least one topographical change protruding from the surface is generated by means of the laser, the laser beam being directed onto the surface by means of a scanner device,
**characterized**
- **in that** the laser beam generates the at least one topographical change on that side of the at least one sheet which faces away from said beam, by continuously fusing this sheet in the region of its machining area, and/or
- **in that** the laser beam describes about the centre of its machining area a narrowing spiral.

2. Method according to Claim 1, **characterized in that** the laser beam is not focused upon the surface.

3. Method according to one of the preceding claims, **characterized in that** at least one further sheet is brought into contact with the at least one coated sheet in such a way that the at least one protruding topographical change causes the formation of at least one gap between the at least two sheets, and **in that** the at least two sheets, in the region of the at least one gap, are welded together in such a way that vaporization products formed in the process can escape into the at least one gap.

4. Method according to Claim 3, **characterized in that** the at least two sheets are welded together in such a way that the resultant weld seam at least partially replaces the at least one topographical change previously generated.

## Revendications

1. Procédé d'usinage au laser de tôles revêtues, dans lequel on produit sur au moins une face d'au moins une tôle, au moyen du laser, au moins un changement de topographie en relief sur la surface, dans lequel le faisceau laser est guidé sur la surface au moyen d'un dispositif de balayage, **caractérisé en ce que**
- le faisceau laser produit le au moins un changement de topographie sur la face de la au moins une tôle située à l'opposé par rapport à lui, en provoquant la fusion traversante de cette tôle dans la région de sa surface d'usinage, et/ou
- le faisceau laser décrit une spirale qui va en se rétrécissant autour du centre de sa surface d'usinage.

2. Procédé selon la revendication 1, **caractérisé en ce que** le faisceau laser n'est pas focalisé sur la surface.

3. Procédé selon l'une quelconque des revendications précédentes, **caractérisé en ce qu'**au moins une autre tôle est mise en contact avec la au moins une tôle revêtue de telle manière que le au moins un changement de topographie en relief entraîne la formation d'au moins une fente entre les au moins deux tôles, et **en ce que** les au moins deux tôles sont soudées l'une à l'autre dans la région de la au moins une fente, de telle manière que des produits d'évaporation apparaissant ici puissent s'échapper dans la au moins une fente.

4. Procédé selon la revendication 3, **caractérisé en ce que** les au moins deux tôles sont soudées l'une à l'autre de telle manière que le cordon de soudure formé remplace au moins partiellement le au moins un changement de topographie produit antérieurement.
